# EUROPÄISCHE PATENTSCHRIFT

(11) **EP 0 982 955 B1**
(45) Veröffentlichungstag und Bekanntmachung des Hinweises auf die Patenterteilung: **02.11.2005**
(21) Anmeldenummer: 99116100.1
(22) Anmeldetag: 17.08.1999
(51) Int. Cl.: H04Q 7/22

(54) **Verfahren zur Zuteilung von Telekommunitionsdiensten**
Method for assigning telecommunication services
Méthode pour l'allocation de services de télécommunication

(30) Priorität: 26.08.1998 DE 19838832
(43) Veröffentlichungstag der Anmeldung: 01.03.2000
(73) Patentinhaber: ROBERT BOSCH GMBH, 70442 Stuttgart (DE)
(72) Erfinder: Hans, Martin, 31141 Hildesheim (DE); Hasemann, Joerg-Michael, 27339 Riede (DE)

(56) Entgegenhaltungen:
- EP-A- 0 658 014
- EP-A- 0 831 669
- EP-A- 0 844 800
- WO-A-98/32265
- WO-A-98/37706
- US-A- 5 313 653

## Beschreibung

### Stand der Technik

Die Erfindung geht von einem Verfahren zur Zuteilung von Telekommunikationsdiensten nach der Gattung des Hauptanspruchs aus.

Aus der GSM-Spezifikation (Global System for Mobile Communications) 02.11, Version 4.9.0 ist es bekannt, Mobilstationen Benutzerklassen zuzuordnen. Dabei teilen die Benutzerklassen die Menge der Mobilstationen zufällig in zehn Klassen auf. Eine Basisstation kann nun für jede dieser Benutzerklassen eine Erlaubnis erteilen oder verweigern, auf einem wahlfreien Zugriffskanal Anforderungsnachrichten zu senden. Die Erlaubniserteilung oder -verweigerung wird den Mobilstationen mittels eines Signalisierungskanals mitgeteilt.

Aus der EP 0 658 014 A1 ist ein zelluläres Telekommunikationssystem bekannt, bei dem Orbitalsatelliten Kommunikationskanäle Teilnehmern in Zellen zuordnen. Jede Teilnehmereinheit ist mit einem Klassenidentifikator programmiert. In Zeiträumen, wenn es wünschenswert ist, den Zugriff auf einen Satelliten auf einige eingeschränkte Klassen oder Klassensätze zu begrenzen, sendet der Satellit eine Liste von gesperrten Klassenidentifikatoren, die nur solchen Teilnehmern Zugang zum Kommunikationssystem erlauben, deren Klassenindifikatoren nicht auf der Liste der gesperrten Klassifikatoren stehen. Die Zeiträume der Begrenzung des Zugriffs auf den Satelliten können beispielsweise Zeiträume hoher Last sein.

Aus der US 5,313,653 ist es bekannt, dass ein Ressourcenzuteiler neue Dienstemitteilungen zu den Kommunikationseinheiten sendet, wenn der entsprechenden Kommunikationseinheit ein neuer Dienst zugeteilt wird oder eine Änderung der erlaubten Dienste erfolgt.

### Vorteile der Erfindung

Das erfindungsgemäße Verfahren mit den Merkmalen des Hauptanspruchs hat demgegenüber den Vorteil, dass Informationssignale an die mindestens eine Teilnehmerstation übertragen werden, die Informationen darüber enthalten, welche der Telekommunikationdienste der mindestens einen Teilnehmerstation zur Nutzung zugeteilt sind. Auf diese Weise ist eine flexiblere Zuteilung von Telekommunikationsdiensten an die mindestens eine Teilnehmerstation möglich. Diese flexiblere Zuteilung von Telekommunikationsdiensten sieht nicht nur die Möglichkeit einer Zuteilung sämtlicher Telekommunikationsdienste oder überhaupt keines Telekommunikationsdienstes an die mindestens eine Teilnehmerstation vor, sondern auch die Zuteilung eines Teiles von verfügbaren Telekommunikationsdiensten an die mindestens eine Teilnehmerstation. Ressourcen des Telekommunikationsnetzes können so effektiver den Teilnehmerstationen des Telekommunikationsnetzes zur Verfügung gestellt werden, so daß bestimmte Telekommunikationsdienste länger der mindestens einen Teilnehmerstation zur Verfügung gestellt werden können.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist, daß zu verschiedenen Zeiten verschiedene Telekommunikatonsdienste der mindestens einen Teilnehmerstation zugeteilt werden. Auf diese Weise können die Ressourcen des Telekommunikationsnetzes noch effektiver und flexibler der mindestens einen Teilnehmerstation dynamisch zur Nutzung zugeteilt werden.

Besonders vorteilhaft ist es, daß die Telekommunikationsdienste der mindestens einen Teilnehmerstation in Abhängigkeit des Nachrichtenverkehrsaufkommens im Telekommunikationsnetz zugeteilt werden. Auf diese Weise lassen sich auch bei hohen Nachrichtenverkehrsaufkommen im Telekommunikationsnetz bestimmte Telekommunikationsdienste durch gezieltes Verbieten anderer Telekommunikationsdienste länger der mindestens einen Teilnehmerstation zur Verfügung stellen.

Eine weitere Flexibilisierung des Verfahrens zur Zuteilung von Telekommunikationsdiensten und damit von Ressourcen des Telekommunikatonsnetzes ergibt sich in vorteilhafter Weise durch die Einteilung der Teilnehmerstationen in Nutzerklassen, wobei die Telekommunikationsdienste den Teilnehmerstationen in Abhängigkeit ihrer Nutzerklasse zugeteilt werden.

Ein weiterer Vorteil besteht darin, daß der mindestens einen Teilnehmerstation durch die Informationssignale, vorzugsweise mittels eines Bitmusters, mitgeteilt wird, welcher Telekommunikationsdienst oder welche Kombination von Telekommunikationsdiensten aus einer vorgegebenen Menge mindestens eines Telekommunikationsdienstes und/oder mindestens einer Kombination von Telekommunikatonsdiensten der mindestens einen Teilnehmerstation zugeteilt wird. Auf diese Weise erfordern die Informationssignale eine minimale Datenmenge und beanspruchen daher für Ihre Übertragung weniger Zeit bei unveränderter Datenrate oder eine geringere Datenrate bei unveränderter Übertragungszeit.

### Zeichnung

Ausführungsbeispiele der Erfindung sind in der Zeichnung dargestellt und in der nachfolgenden Beschreibung näher erläutert. Es zeigen Figur 1 einen Ausschnitt aus einem Telekommunikationsnetz, Figur 2 ein erstes Bitmuster für die Zuteilung von Telekommunikationsdiensten und Figur 3 ein zweites Bitmuster für die Zuteilung von Telekommunikationsdiensten.

### Beschreibung der Ausführungsbeispiele

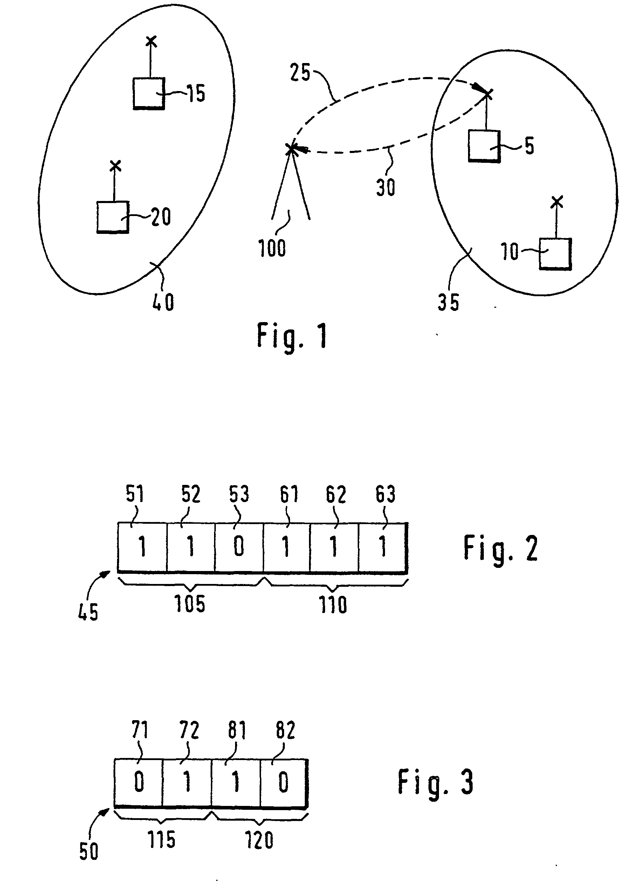

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also eine Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein. Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekummunikatonsdienst beispielsweise ein Datenbenutzungsdienst vorgesehen sein, der von den Mobilstationen 5, 10, 15, 20 benutzt werden kann, um kurze Datenbursts an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Kapazitätsanforderungsdienst vorgesehen sein, bei dem der RACH 30 von den Mobilstationen 5, 10, 15, 20 benutzt werden darf, um gesonderte Datenkanäle zur Datenübertragung anzufordern. Als ein dritter Telekommunikationsdienst kann beispielsweise ein Sprachrufdienst vorgesehen sein, bei dem der RACH 30 von den Mobilstationen 5, 10, 15, 20 benutzt werden darf, um Sprachübertragungen einzuleiten oder fortzusetzen. Die drei Telekommunikatonsdienste können einzeln und/oder in beliebiger Kombination den Mobilstationen 5, 10, 15, 20 vom Netzbetreiber zur Nutzung zugeteilt werden.

Die Telekommunikationsdienste müssen dabei von der entsprechenden Mobilstation über die Basisstation 100 beim Netzbetreiber angefordert werden. Die Telekommunikationsdienste werden dabei über den RACH 30 den Mobilstationen 5, 10, 15, 20 zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat. Die Telekommunikationsdienste werden üblicherweise über den RACH 30 von den Mobilstationen 5, 10, 15, 20 angefordert oder zugänglich gemacht.

Für den Fall, daß die Nachricht einer Mobilstation auf dem RACH 30 mit einer anderen Nachricht kollidiert, findet kein ordnungsgemäßer Empfang dieser Nachricht in der Basisstation 100 statt, so daß die Basisstation 100 auch keine Bestätigungsinformation an die entsprechende Mobilstation zurücksenden kann. Die Mobilstation sendet daher nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, daß der Netzbetreiber die Nutzung der Telekommunikationsdienste für die einzelnen Mobilstationen 5, 10, 15, 20 über den RACH 30 gezielt einschränkt. Dabei können einzelne Telekommunikationsdienste beispielsweise nur für bestimmte Nutzerklassen von Mobilstationen vorübergehend oder dauerhaft bevorrechtigt zur Verfügung gestellt werden. Gemäß den beschriebenen Ausführungsbeispielen nach Figur 1 ist eine erste Nutzerklasse 35 vorgesehen, die die erste Mobilstation 5 und die zweite Mobilstation 10 umfaßt. Weiterhin ist eine zweite Nutzerklasse 40 vorgesehen, die die dritte Mobilstation 15 und die vierte Mobilstation 20 umfaßt. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen. Weiterhin ist es möglich, mehr als zwei Mobilstationen in einer Nutzerklasse vorzusehen. Der Netzbetreiber kann nun die Telekommunikationsdienste den einzelnen Mobilstationen in Abhängigkeit ihrer Zugehörigkeit zu einer der beiden Nutzerklassen 35, 40 zuteilen. Das bedeutet, daß den beiden Mobilstationen 5, 10 der ersten Nutzerklasse 35 gleiche Telekommunikationsdienste vom Netzbetreiber zugeteilt werden. In analoger Weise werden auch den Mobilstationen 15, 20 der zweiten Nutzerklasse 40 gleiche Telekommunikationsdienste zugeteilt. Die den Mobilstationen 5, 10 der ersten Nutzerklasse 35 zugeteilten Telekommunikationsdienste können sich von den den Mobilstationen 15, 20 der zweiten Nutzerklasse 40 zugeteilten Telekommunikationsdiensten unterscheiden. Die den Mobilstationen der beiden Nutzerklassen 35, 40 zugeteilten Telekommunikationsdienste können jedoch auch gleich sein. Der Netzbetreiber informiert die einzelnen Mobilstationen 5, 10, 15, 20 durch Informationssignale, die von der Basisstation 100 an die jeweilige Mobilstation 5, 10, 15, 20 übertragen werden, welche der Telekommunikationsdienste des Netzbetreibers der entsprechenden Mobilstation 5, 10, 15, 20 zugeteilt sind. Dies wird stellvertretend für alle Mobilstationen 5, 10, 15, 20 im folgenden anhand der Zuteilung von Telekommunikationsdiensten des Netzbetreibers an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als broadcast control channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, welcher Telekommunikationsdienst und/oder welche Kombination von Telekommunikationsdiensten aus einer vorgegebenen Menge von Telekommunikationsdiensten der ersten Mobilstation 5 zugeteilt wird. Bei der vorgegebenen Menge von Telekommunikationsdiensten handelt es sich dabei um die bereits beschriebenen Telekommunikationsdienste, wie Datenbenutzungsdienst, Kapazitätsanforderungsdienst und Sprachrufdienst. Da das Bitmuster nicht nur zur ersten Mobilstation 5, sondern auch zu allen anderen Mobilstationen 10, 15, 20 ebenfalls über den Signalisierungskanal 25, der wie beschrieben als BCCH und damit als Punkt-zu-Mehrpunkt-Kanal ausgebildet ist, so daß alle Mobilstationen die gleichen Informationen zur gleichen Zeit erhalten, gesendet wird, um diesen die ihnen zugeteilten Telekommunikationsdienste mitzuteilen, umfaßt das Bitmuster die zugeteilten Telekommunikationsdienste für jede Nutzerklasse 35, 40. Das zugehörige Bitmuster ist in Figur 2 dargestellt und mit dem Bezugszeichen 45 gekennzeichnet. Es umfaßt einen ersten Bitmusterabschnitt 105 für die erste Nutzerklasse 35 und einen zweiten Bitmusterabschnitt 110 für die zweite Nutzerklasse 40. Beide Bitmusterabschnitte 105, 110 umfassen jeweils 3 Bit. Ein erstes Bit 51 des ersten Bitmusterabschnitts 105 des ersten Bitmusters 45 gibt dabei an, ob der Datenbenutzungsdienst den Mobilstationen 5, 10 der ersten Benutzerklasse 35 zugeteilt ist. Ein zweites Bit 52 des ersten Bitmusterabschnitts 105 des ersten Bitmusters 45 gibt an, ob der Kapazitätsanforderungsdienst den Mobilstationen 5, 10 der ersten Nutzerklasse 35 zugeteilt ist. Ein drittes Bit 53 des ersten Bitmusterabschnitts 105 des ersten Bitmusters 45 gibt an, ob der Sprachrufdienst den Mobilstationen 5, 10 der ersten Nutzerklasse 35 zugeteilt ist. Ein erstes Bit 61 des zweiten Bitmusterabschnitts 110 des ersten Bitmusters 45 gibt an, ob der Datenbenutzungsdienst den Mobilstationen 15, 20 der zweiten Nutzerklasse 40 zugeteilt ist. Ein zweites Bit 62 des zweiten Bitmusterabschnitts 110 des ersten Bitmusters 45 gibt an, ob der Kapazitätsanforderungsdienst den Mobilstationen 15, 20 der zweiten Nutzerklasse 40 zugeteilt ist. Ein drittes Bit 63 des zweiten Bitmustersabschnitt 110 des ersten Bitmusters 45 gibt an, ob den Mobilstationen 15, 20 der zweiten Nutzerklasse 40 der Sprachrufdienst zugeteilt ist. Eine logische Eins des jeweiligen Bits gibt an, daß der entsprechende Telekommunikationsdienst den entsprechenden Mobilstationen zugeteilt ist und eine logische Null gibt an, daß der entsprechende Telekommunikationsdienst den entsprechenden Mobilstationen nicht zugeteilt ist. Gemäß Figur 2 sind im ersten Bitmusterabschnitt 105 des ersten Bitmusters 45 das erste Bit 51 und das zweite Bit 52 auf Eins gesetzt und das dritte Bit 53 ist auf Null gesetzt. Das bedeutet, daß den Mobilstationen 5, 10 der ersten Nutzerklasse 35 der Datenbenutzungsdienst und der Kapazitätsanforderungsdienst sowie die Kombination aus beiden Diensten zugeteilt ist. Der Sprachrufdienst ist jedoch den Mobilstationen 5, 10 der ersten Nutzerklasse 35 nicht zugeteilt. Im zweiten Bitmusterabschnitt 110 des ersten Bitmusters 45 sind das erste Bit 61, das zweite Bit 62 und das dritte Bit 63 jeweils auf Eins gesetzt. Das bedeutet, daß alle drei Telekommunikationsdienste sowie alle möglichen Kombinationen aus zwei oder drei Telekommunikationsdiensten den Mobilstationen 15, 20 der zweiten Nutzerklasse 40 zugeteilt sind. Anhand einer vom Benutzer der entsprechenden Mobilstation in die Mobilstation eingeführten Zugangsberechtigungskarte, auf der die Nutzerklasse der Mobilstation gespeichert ist, erkennt die Mobilstation ihre Zugehörigkeit zur entsprechenden Nutzerklasse und kann daher gezielt auf den zugehörigen Bitmusterabschnitt des entsprechenden Bitmusters zugreifen, um die ihm in dieser Nutzerklasse zugeteilten Telekommunikationsdienste und/oder Kombinationen aus Telekommunikationsdiensten zu erkennen. Die zugeteilten Telekommunikationsdienste kann die entsprechende Mobilstation dann über den RACH 30 nutzen, wie dies in Figur 1 anhand der ersten Mobilstation 5 dargestellt ist, die Nachrichten zur Nutzung der ihr zugeteilten Telekommunikationsdienste über den RACH 30 an die Basisstation 100 überträgt. Gemäß Figur 2 sind für jede Nutzerklasse drei Bit erforderlich, um bei einer Anzahl von drei Telekommunikationsdiensten der jeweiligen Mobilstation mitzuteilen, welche der drei Telekommunikationsdienste ihr allein oder in beliebiger Kombination zugeordnet sind. Für zwei Nutzerklassen ergibt sich daher die Länge des ersten Bitmusters 45 zu 2 x 3 = 6 Bit. Allgemein errechnet sich die Länge des ersten Bitmusters 45 aus dem Produkt der Anzahl der Nutzerklassen und der Anzahl der möglichen Telekommunikationsdienste.

Für den Fall, daß ein Bitmusterabschnitt des ersten Bitmusters 45 nur ein einziges Bit enthält, das auf Eins gesetzt ist, ist nur der zugehörige Telekommunikationsdienst der entsprechenden Mobilstation zugeordnet, wobei Kombinationen mit den anderen Telekommunikationsdiensten nicht möglich sind, da deren Bits auf Null gesetzt sind.

Ein weiteres Ausführungsbeispiel zur Bildung eines Bitmusters für die Zuteilung von Telekommunikationsdiensten an eine Mobilstation ist in Figur 3 dargestellt. Die über den Signalisierungskanal 25 übertragenen Informationssignale umfassen dabei ein zweites Bitmuster 50, das der ersten Mobilstation 5 mitteilt, welcher Telekommunikationsdienst oder welche Kombination von Telekommunikationsdiensten aus einer vorgegebenen Menge mindestens eines Telekommunikationsdienstes und/oder mindestens einer Kombination von Telekommunikationsdiensten der ersten Mobilstation 5 zugeteilt wird. Entsprechendes gilt für die Zuteilung von Telekommunikationsdiensten oder Kombinationen von Telekommunikationsdiensten an die anderen Mobilstationen 10, 15, 20. Dabei wird an alle Mobilstationen 5, 10, 15, 20 ein zweites Bitmuster 50 über jeweils einen Signalisierungskanal übertragen, das einen ersten Bitmusterabschnitt 115 für die erste Nutzerklasse 35 und einen zweiten Bitmusterabschnitt 120 für die zweite Nutzerklasse 40 umfaßt. Die erste Mobilstation 5 und die zweite Mobilstation 10 erhalten daher Informationen über die ihnen zugeteilten Telekommunikationsdienste durch Auswertung des ersten Bitmusterabschnitts 115 des zweiten Bitmusters 50 und die dritte Mobilstation 15 und die vierte Mobilstation 20 erhalten Informationen über die ihnen zugeteilten Telekommunikationsdienste durch Auswertung des.zweiten Bitmusterabschnitts 120 des zweiten Bitmusters 50. Der erste Bitmusterabschnitt 115 des zweiten Bitmusters 50 umfaßt ein erstes Bit 71 und ein zweites Bit 72. Der zweite Bitmusterabschnitt 120 des zweiten Bitmusters 50 umfaßt ebenfalls ein erstes Bit 81 und ein zweites Bit 82. Gemäß Figur 3 ist das erste Bit 71 des ersten Bitmusterabschnitts 115 des zweiten Bitmusters 50 auf Null gesetzt und das zweite Bit 72 des ersten Bitmusterabschnitts 115 des zweiten Bitmusters 50 ist auf Eins gesetzt. Das erste Bit 81 des zweiten Bitmusterabschnitts 120 des zweiten Bitmusters 50 ist auf Eins gesetzt und das zweite Bit 82 des zweiten Bitmusterabschnitts 120 des zweiten Bitmusters 50 ist auf Null gesetzt.

Gemäß dem zweiten Ausführungsbeispiel soll eine Menge aus einem Telekommunikationsdienst und zwei Kombinationen von Telekommuniktionsdiensten für die Zuteilung an die Mobilstationen 5, 10, 15, 20 vorgesehen sein. Dabei umfaßt diese Menge im beschriebenen Ausführungsbeispiel den Sprachrufdienst als erstes Mengenelement, die Kombination aus Sprachrufdienst und Kapazitätsanforderungsdienst als zweites Mengenelement und die Kombination als Sprachrufdienst, Kapazitätsanforderungdienst und Datenbenutzungsdienst als drittes Mengenelement. Nur jeweils ein Mengenelement kann dabei der entsprechenden Mobilstation zugeteilt werden. Die Nummer dieses Mengenelementes wird dabei binär durch die 2 Bits des jeweiligen Bitmusterabschnitts des zweiten Bitmusters 50 dargestellt. Gemäß dem Ausführungsbeispiel nach Figur 3 wird somit den Mobilstationen 5, 10 der ersten Nutzerklasse 35 aufgrund der Bitkombination 0-1 im ersten Bitmusterabschnitt 115 des zweiten Bitmusters 50, d. h. einer binären Eins das erste Mengenelement, also lediglich der Sprachrufdienst zugeteilt. Den Mobilstationen 15, 20 der zweiten Nutzerklasse 40 hingegen wird aufgrund der Bitkombination 1-0 im ersten Bitmusterabschnitt 115 des zweiten Bitmusters 50, d. h. einer binären Zwei das zweite Mengenelement und somit sowohl der Sprachrufdienst als auch der Kapazitätsanforderungsdienst zur Nutzung zugeteilt. Der Menge könnte noch ein viertes Mengenelement mit der Bitkombination 0-0 hinzugefügt werden, ohne das die Bitzahl pro Bitmusterabschnitt erhöht werden müßte. Für eine Menge mit maximal vier Mengenelementen sind pro Nutzerklasse 2 Bit zur Darstellung des zugeteilten Mengenelementes erforderlich, so daß im zweiten Ausführungsbeispiel gemäß Figur 3 bei zwei Nutzerklassen die Länge des zweiten Bitmusters 50 2 x 2 = 4 Bit beträgt. Allgemein ergibt sich die Länge des zweiten Bitmusters 50 gemäß dem zweiten Ausführungsbeispiel aus dem Produkt der Anzahl der Nutzerklassen und dem auf die nächstgrößere ganze Zahl aufgerundeten Zweier-Logarithmus aus der Anzahl der Mengenelemente.

Die Informationsignale werden von der Basisstation 100 zu den Mobilstationen 5, 10, 15, 20 zu vorgegebenen Zeiten, vorzugsweise in regelmäßigen Abständen übertragen. Der Netzbetreiber kann die Telekommunikationsdienste in Abhängigkeit des Nachrichtenverkehrsaufkommens im Telekommunikationsnetz und damit in Abhängigkeit einer erwarteten Auslastung des RACH 30 den einzelnen Mobilstationen 5, 10, 15, 20 in Abhängigkeit ihrer Nutzerklasse zuteilen und dadurch bestimmte Telekommunikationsdienste einer bestimmten Nutzerklasse oder bestimmten Nutzerklassen vorübergehend oder dauerhaft bevorrechtigt zur Verfügung stellen. Da sich das Nachrichtenverkehrsaufkommen im Telekommunikationsnetz mit der Zeit verändert, ändert sich auch die erwartete Auslastung des RACH 30 mit der Zeit, so daß in der Regel zu verschiedenen Zeiten verschiedene Telekommunikationsdienste mittels entsprechend veränderter Bitmusterbelegung den Mobilstationen 5, 10, 15, 20 zugeteilt werden. Der aus der GSM-Spezifikation 02.11, Version 4.9.0 bekannte Fall der Zuteilung aller Telekommunikationsdienste oder alternativ keines Telekommunikationssdienstes an die entsprechenden Mobilstationen 5, 10, 15, 20 stellt einen Spezialfall des erfindungsgemäßen Verfahrens dar. Werden dabei einer Nutzerklasse sämtliche Telekommunikationsdienste zugeteilt, so sind gemäß dem Ausführungsbeispiel nach Figur 2 sämtliche Bits des zugehörigen Bitmusterabschnitts auf Eins gesetzt. Wird den Mobilstationen einer Nutzerklasse kein Telekommunikationsdienst zugeteilt, so sind gemäß dem Ausführungsbeispiel nach Figur 2 sämtliche Bits des zugehörigen Bitmusterabschnitts auf Null gesetzt.

Eine Entlastung des RACH 30 kann zusätzlich dadurch erzielt werden, daß ein Wiederholungszähler und/oder ein Wiederholungsabstand vorgesehen ist. Der Wiederholungszähler gibt die maximale Anzahl der erlaubten Wiederholversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Telekommunikationsdienste den entsprechenden Mobilstationen gegebenenfalls zusammen mit weiteren funkzellenspezifischen Informationen auf dem zugehörigen Signalisierungskanal 25 mitgeteilt werden.

Das erfindungsgemäße Verfahren kann in einem Mobilfunknetz nach UMTS-Standard (Universal Mobile Telecommunication System), nach GSM-Standard, oder dergleichen realisiert werden.

Das erfindungsgemäße Verfahren ist nicht auf die Anwendung in einem Mobilfunknetz beschränkt, sondern generell in Telekommunikationsnetzen zur Zuteilung von Telekommunikationsdiensten an Teilnehmerstationen des Telekommunikationsnetzes anwendbar, wobei das Telekommunikationsnetz beispielsweise auch ein drahtgebundenes Festnetz sein kann.

## Patentansprüche

1. Verfahren zur Zuteilung von Telekommunikationsdiensten eines Telekommunikationsnetzes an mindestens eine Teilnehmerstation (5, 10, 15, 20) des Telekommunikationsnetzes, wobei Informationssignale an die mindestens eine Teilnehmerstation (5, 10, 15, 20) übertragen werden, die Informationen darüber enthalten, welche der Telekommunikationsdienste der mindestens einen Teilnehmerstation (5, 10, 15, 20) zur Nutzung zugeteilt sind, **dadurch gekennzeichnet, dass** die Telekommunikationsdienste der mindestens einen Teilnehmerstation (5, 10, 15, 20) in Abhängigkeit einer erwarteten Auslastung eines wahlfreien Zugriffskanals zugeteilt werden.

2. Verfahren nach Anspruch 1, **dadurch gekennzeichnet, dass** die Informationssignale zu vorgegebenen Zeiten an die mindestens eine Teilnehmerstation (5, 10, 15, 20) übertragen werden.

3. Verfahren nach Anspruch 1 oder 2, **dadurch gekennzeichnet, dass** zu verschiedenen Zeiten verschiedene Telekommunikationsdienste der mindestens einen Teilnehmerstation (5, 10, 15, 20) zugeteilt werden.

4. Verfahren nach einem der vorherigen Ansprüche, **dadurch gekennzeichnet, dass** die mindestens eine Teilnehmerstation (5, 10, 15, 20) einer Nutzerklasse (35, 40) zugeteilt wird und dass die Telekommunikationsdienste der mindestens einen Teilnehmerstation (5, 10, 15, 20) in Abhängigkeit ihrer Nutzerklasse (35, 40) zugeteilt werden.

5. Verfahren nach einem der vorherigen Ansprüche, **dadurch gekennzeichnet, dass** die Telekommunikationsdienste zumindest teilweise über einen wahlfreien Zugriffskanal (30) der mindestens einen Teilnehmerstation (5, 10, 15, 20) zugänglich gemacht werden.

6. Verfahren nach einem der vorherigen Ansprüche, **dadurch gekennzeichnet, dass** die Informationssignale über mindestens einen Signalisierungskanal (25) an die mindestens eine Teilnehmerstation (5, 10, 15, 20) übertragen werden.

7. Verfahren nach einem der vorherigen Ansprüche, **dadurch gekennzeichnet, dass** der mindestens einen Teilnehmerstation (5, 10, 15, 20) durch die Informationssignale mitgeteilt wird, welcher Telekommunkationsdienst oder welche Kombination von Telekommunikationsdiensten aus einer vorgegebenen Menge mindestens eines Telekommunikationsdienstes oder mindestens einer Kombination von Telekommunikationsdiensten der mindestens einen Teilnehmerstation (5, 10, 15, 20) zugeteilt wird.

8. Verfahren nach Anspruch 7, **dadurch gekennzeichnet, dass** die Mitteilung des Telekommunkationsdienstes oder der Kombination von Telekommunikationsdiensten mittels eines Bitmusters (45, 50) erfolgt.

## Claims

1. Method for assigning telecommunication services of a telecommunication network to at least one subscriber station (5, 10, 15, 20) of the telecommunication network, wherein information signals are transmitted to the at least one subscriber station (5, 10, 15, 20), which information signals contain information about which of the telecommunication services of the at least one subscriber station (5, 10, 15, 20) is to be assigned for use, **characterized in that** the telecommunication services of the at least one subscriber station (5, 10, 15, 20) are assigned as a function of an anticipated capacity utilization of an optional access channel.

2. Method according to Claim 1, **characterized in that** the information signals are transmitted to the at least one subscriber station (5, 10, 15, 20) at predefined times.

3. Method according to Claim 1 or 2, **characterized in that** various telecommunication services of the at least one subscriber station (5, 10, 15, 20) are assigned at various times.

4. Method according to one of the preceding claims, **characterized in that** the at least one subscriber station (5, 10, 15, 20) is assigned to a user class (35, 40), and **in that** the telecommunication services of the at least one subscriber station (5, 10, 15, 20) are assigned as a function of its user class (35, 40).

5. Method according to one of the preceding claims, **characterized in that** the telecommunication services are made accessible to the at least one subscriber station (5, 10, 15, 20) at least partially on an optional access channel (30).

6. Method according to one of the preceding claims, **characterized in that** the information signals are transmitted to the at least one subscriber station (5, 10, 15, 20) on at least one signalling channel (25).

7. Method according to one of the preceding claims, **characterized in that** the at least one subscriber station (5, 10, 15, 20) is informed by means of the information signals about which telecommunication service or which combination of telecommunication services from a predefined set of at least one telecommunication service or at least one combination of telecommunication services is assigned to the at least one subscriber station (5, 10, 15, 20).

8. Method according to Claim 7, **characterized in that** information about the telecommunication service or the combination of telecommunication services is provided by means of a bit pattern (45, 50).

## Revendications

1. Procédé d'attribution de services de télécommunication dans un réseau de télécommunication vers au moins une station d'abonnés (5, 10, 15, 20) du réseau, transmettant vers l'au moins une station d'abonnés (5, 10, 15, 20), des signaux d'informations contenant des informations relatives aux services de télécommunication du réseau attribués à l'au moins une station d'abonnés (5, 10, 15, 20) pour être utilisées par celle-ci,
**caractérisé en ce que**
les services de télécommunication sont attribués à la station d'abonnés (5, 10, 15, 20) en fonction d'une charge prévisible d'un canal d'accès libre.

2. Procédé selon la revendication 1,
**caractérisé en ce que**
les signaux d'informations sont transmis vers la station d'abonnés (5, 10, 15, 20) à des instants prédéterminés.

3. Procédé selon l'une quelconque des revendications 1 ou 2,
**caractérisé en ce qu'**
à des instants différents, on attribue des services de télécommunication différents à la station d'abonnés (5, 10, 15, 20).

4. Procédé selon l'une quelconque des revendications précédentes,
**caractérisé en ce que**
la station d'abonnés (5, 10, 15, 20) se voit attribuer une classe d'utilisateur (35, 40), et les services de télécommunication de la station d'abonnés (5, 10, 15, 20) sont attribués en fonction de sa classe d'utilisateur (35, 40).

5. Procédé selon l'une quelconque des revendications précédentes,
**caractérisé en ce que**
les services de télécommunication sont rendus accessibles au moins en partie par un canal d'accès libre (30) de la station d'abonnés (5, 10,15, 20).

6. Procédé selon l'une quelconque des revendications précédentes,
**caractérisé en ce que**
les signaux d'informations sont transmis par au moins un canal de signalisation (25) vers la station d'abonnés (5, 10, 15, 20).

7. Procédé selon l'une quelconque des revendications précédentes,
**caractérisé en ce que**
la station d'abonnés (5, 10, 15, 20) reçoit des signaux d'informations indiquant quel service de télécommunication ou quelle combinaison de services de télécommunication d'un ensemble prédéfini d'au moins un service de télécommunication ou d'au moins une combinaison de services de télécommunication, est attribué(e) à la station d'abonnés (5, 10, 15, 20).

8. Procédé selon la revendication 7,
**caractérisé en ce que**
la communication du service de télécommunication ou la combinaison des services de télécommunication se fait selon un modèle de bit (45, 50).
